Europäisches Patentamt

European Patent Office

Office européen des brevets

(11) Publication number: **0 426 006 A2**

# EUROPEAN PATENT APPLICATION

(21) Application number: **90120469.3**

(22) Date of filing: **25.10.90**

(51) Int. Cl.⁵: **G02C 5/22**

(30) Priority: **31.10.89 IT 8260489**

(43) Date of publication of application:
**08.05.91 Bulletin 91/19**

(84) Designated Contracting States:
**AT BE CH DE DK ES FR GB GR IT LI LU NL SE**

(71) Applicant: **GROSSO LUIGI AND BORSATO SERGIO, TRADING UNDER THE TRADING STYLE NUOVE IDEE DESIGN S.D.F. DI GROSSO L. & BORSATO S.**
**Vialle Della Resistenza, 18**
**I-31038 Paese (Prov. of Treviso)(IT)**

(72) Inventor: **Borsato, Sergio**
**Via Pisa, 26**
**I-31100 Treviso(IT)**
Inventor: **Grosso, Luigi**
**Via Longarone, 8/B**
**I-31100 Dosson di Casier(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Hinge particularly for spectacle frames.**

(57) The hinge for coupling the rod to the front part of spectacle frames comprises a pivoting device (6,7,10) for allowing the rotation of the rod (4) along a plane which is inclined with respect to the plane of arrangement of the front part (2). Coupling members (17,18,19) are provided for temporary coupling between the rod (4) and the front part (2) as well as a projection (15) for locking the rotation of the rod (4). It is thus possible to store, in case of non-use, the rods (4) adjacent to the front part (2) even if the front part has a given curvature.

FIG.5

EP 0 426 006 A2

## HINGE PARTICULARLY FOR SPECTACLE FRAMES

The present invention relates to a hinge particularly for spectacle frames of the type which is usable for coupling the rod to the front part of spectacle frames.

Spectacle frames are currently known in which the coupling between the rod and the front part occurs by means of hinges which allow the movement of the rod along planes lying substantially perpendicular to the plane of arrangement of said front part: the rods are thus hinged to the lateral ends of the front part.

The disadvantages of said known types of hinge mainly consist of the fact that the rods, once folded onto the front part, undergo deformation if the user holds the spectacles in his hands or in any case stores them for example in a jacket pocket.

This deformation occurs since the terminal ends of the rods usually abut at the rings or lens mounts of the front part: the central part of the rods thus remains at a given distance from the lenses.

The rod is thus blocked at its ends, with consequent deformation thereof in case of compression of the spectacles.

In known spectacles, the oscillatable arrangement of the rods with respect to the front part furthermore causes, if the user suddenly turns his head or collides accidentally against an obstacle, a lateral movement of said rods, facilitating their opening and closure, so as to render the spectacles easily displaceable.

Known hinges are furthermore structurally complicated in some cases, and this increases the overall costs of the spectacles.

The problem related to optimum couplings between the rods and the front part, and between the lenses and said front part, is also strongly felt, since the use of separate devices entails increased assembly time and the intensive use of labor which further increase the overall costs of the spectacles.

The aim of the present invention is therefore to eliminate the disadvantages described above in known types by providing a hinge which allows to easily and rapidly close the rods onto the front part so that said rods are as adjacent as possible thereto along their entire length.

Within the scope of the above described aim, another important object is to provide a hinge which allows, once the rods are folded, modest dimensions which facilitate the transportation or storage of spectacles in a case.

Another important object is to provide a hinge which associates with the preceding characteristics that of allowing to obtain a condition of stable opening of the rods with respect to the front part, said condition being maintained even in case of accidental impacts or sudden head movements.

Another important object is to provide a hinge which is structurally simple as well as being quick to manufacture.

Another object is to provide a hinge which allows to achieve a rapid and easy assembly of the rods to the front part as well as an easy assembly of the lenses to said front part.

Not least object is to provide a hinge which associates with the preceding characteristics that of being reliable and safe in use and of having modest manufacturing costs.

The above aim and objects, as well as others which will become apparent hereinafter, are achieved by a hinge, particularly for the coupling between the rod and the front part of spectacle frames, which is characterized in that it comprises pivoting means for allowing the rotation of said rod along a plane which is inclined with respect to the plane of arrangement of said front part, means being provided for the temporary coupling between said rod and said front part and for the locking of the rotation of said rod.

Further characteristics and advantages of the invention will become apparent from the detailed description of some particular but not exclusive embodiments, illustrated only by way of non-limitative example in the accompanying drawings, wherein:

figure 1 is a view of a first embodiment of a pair of spectacles, in which the rotation which can be imparted to a rod is schematically illustrated;

figure 2 is a view of the end of the front part which can be coupled to the rod;

figure 3 is a view, similar to the preceding one, of the end of the rod which can be applied to the front part;

figure 4 is a front view of the end of the rod which can be coupled to the front part;

figure 5 is a sectional view, taken along a longitudinal median plane, of the region of interconnection between the rod and the front part;

figure 6 is a partially cutout perspective view of the interconnection action between the rod and the front part;

figure 7 is a view, similar to that of figure 5, of a second embodiment of the hinge for spectacle frames according to the invention;

figure 8 is a partially sectional view of the means for locking the rotation of the rod;

figure 9 is a view, similar to that of figure 7, of another embodiment of the hinge according to the invention;

figure 10 is a front view of the end of the rod which can be coupled to the front part according to the embodiment of the preceding figure;

figure 11 is a view, similar to the preceding one, of the end of the front part which can be coupled to the rod;

figure 12 is a view, similar to that of figure 5, of a further embodiment of the hinge according to the invention;

figure 13 is a perspective view of the end of the rod which can be coupled to the front part;

figure 14 is a view, similar to the preceding one, of the end of the front part with which the rod can be coupled;

figure 15 is a sectional view of the hinge taken along the plane XIV-XIV of figure 11, in which the ball has been omitted for the sake of clarity;

figure 16 is a view, similar to the preceding one, of the hinge with the ball.

With reference to the above figures, the reference numeral 1 indicates spectacle frames which are constituted by a front part 2, with which lenses 3 are associated, and by a pair of rods 4, which are connected to the front part 2 by means of hinges 5.

Each of said hinges 5 is constituted by a first terminal 6, which embraces the end of the rod 4 which is opposite to the end which interacts with the ear of the user, and by a second terminal 7, associated with the free end of the front part 2.

Said first terminal and said second terminal are rotatably associated with one another along a plane which is inclined with respect to the plane of arrangement of the front part 2.

Said first terminal and said second terminal in fact respectively have a first surface 8 and a second surface 9 which face one another and which, once coupled, form an acute angle with respect to the plane of arrangement of the front part 2.

The pivoting between the first terminal 6 and the second terminal 7 occurs by means of a hollow pivot 10 which protrudes from the first terminal 6 perpendicular and centrally to the first surface 8.

The terminal end of the hollow pivot 10 can be accommodated at an adapted first seat 11 which is defined centrally and perpendicular to the second surface 9 of the second terminal 7.

Said first seat 11 passes through the second terminal 7 and is connected to a groove 12 defined on the front part 2 along an axis which is approximately parallel to the longitudinal axis of the rod 4.

The groove 12 is in turn connected to a second seat 13 defined at the front part 2 and extending to affect the adjacent third seat 14 for the lenses 3.

A means for locking the rotation of the rod 4 with respect to the front part 2, constituted by a projection 15, furthermore protrudes radially to the hollow pivot 10 from the first surface 8 of the first terminal 6.

Said projection can in fact be accommodated at a fourth seat 16 defined on the second surface 9 of the second terminal 7, said fourth seat having a semi-elliptical configuration which is adapted for allowing a rotation of the projection 15 through an arc of approximately one hundred and eighty degrees.

The hinge 5 comprises, besides the hollow pivot 10 which constitutes a means for the pivoting between the front part 2 and the rod 4, means for temporary coupling between said front part 2 and said rod 4 which are constituted by a wire 17, preferably made of nylon, which has an expansion 18 at one of its ends.

A fifth seat 19 shaped complementarily to the expansion 18 is furthermore defined at the first terminal 6 and is connected to said hollow pivot 10.

It is thus possible to insert the wire 17 in the hollow pivot 10 until the expansion 18 is accommodated in the fifth seat 19, after which the wire 17 is passed at the groove 12 and at the second seat 13 which are defined on the front part to then extract it at the third seat 14, thus perimetrically embracing the lenses 3 at sixth seats 20 defined thereon.

The locking can occur at the central bridge or on the other rod: it is thus possible to spot-weld the wire 17, creating the expansion 18 at the fifth seat 19 of the first terminal 6 of the other rod 4.

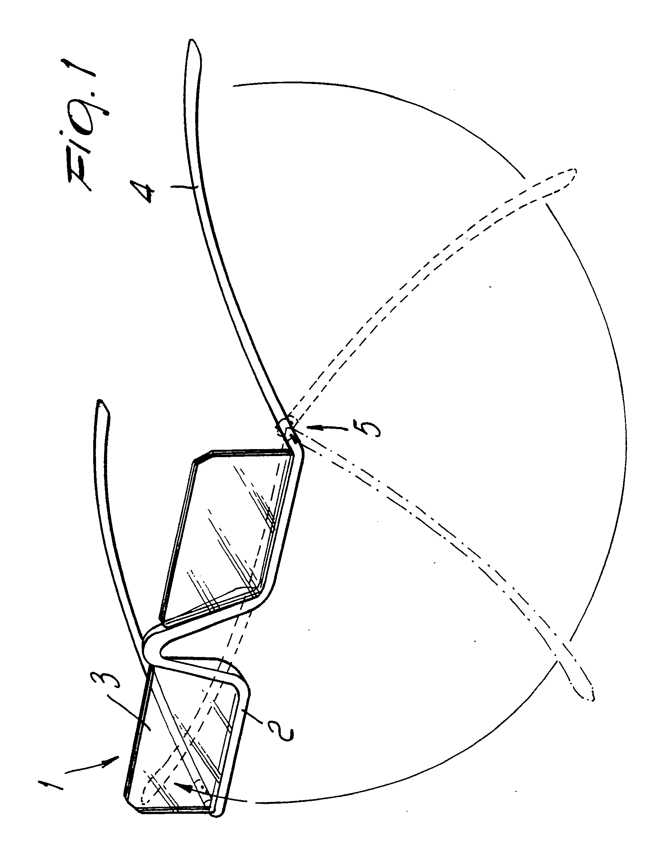

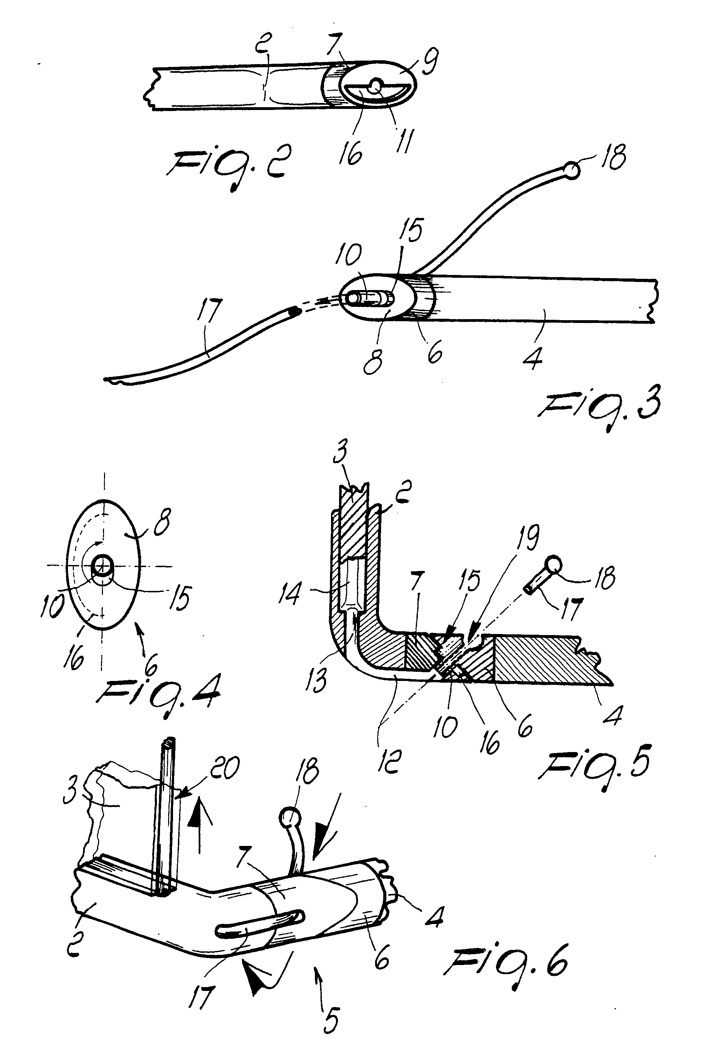

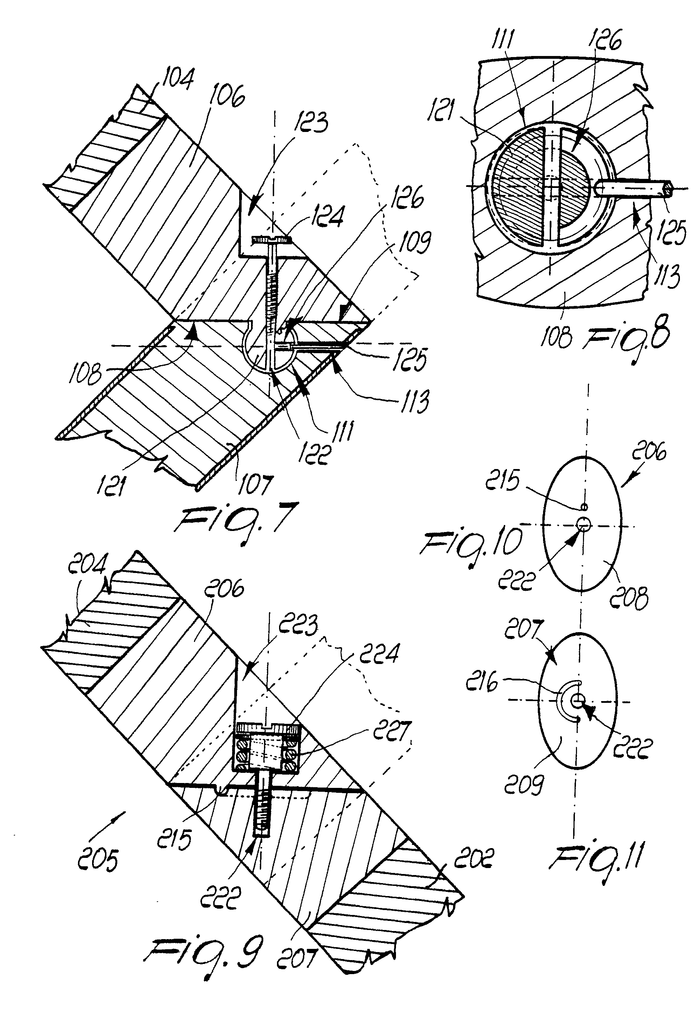

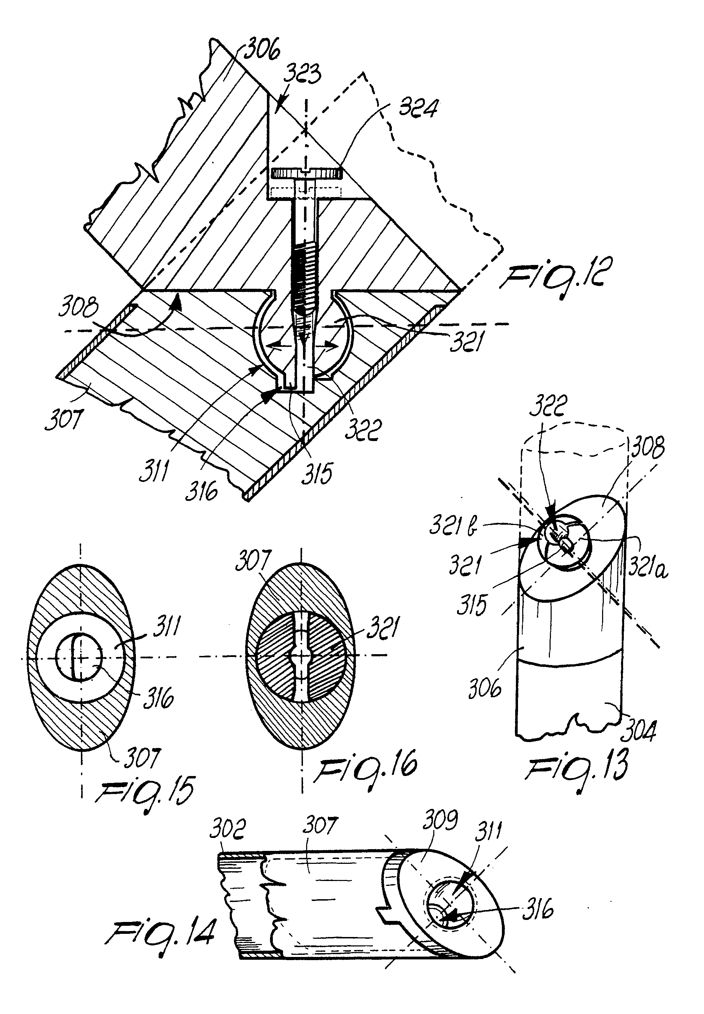

Figures 5 and 6 show the rod in the open condition with respect to the front part 2, whereas figure 1 schematically illustrates the rotation to which the rod can be subjected.

By virtue of the configuration of the first terminal 6 and of the second terminal 7, it is possible to impart a rotation to the rod 4 along a plane which is inclined with respect to the plane of arrangement of the front part 2, causing said rod 4 to rotate so as to become arranged approximately parallel to said front part 2.

This can be obtained even if the front part 2 has an arc-like configuration simply by varying the angle which is formed between the planes of arrangement of said front part and those of the first surface 8 and of the second surface 9 of the first and second terminals.

The optimum rotation between the rod and the front part is ensured by the presence of the pivot 10, whereas the presence of the projection 15 allows to limit the rotation of the rod between the two conditions of rod open in order to wear the spectacle frame and of rod folded in order for example to store it in a case.

Finally, the presence of the wire 17 allows to both achieve the optimum coupling between the rod and the front part and keep the lenses in position.

It has thus been observed that the invention has achieved the intended aim and objects, a hinge having been provided which allows to impart to the rod a rotation which moves it from the open condition for the use of the spectacles up to a folded position which is adjacent to the plane of arrangement of said spectacles for their optimum storage in a pocket or in a case or for easily carrying them in the user's hand.

The hinge is furthermore structurally very simple, its use being reliable and safe in the course of time by making for example the first and second terminal of appropriate self-lubricating materials.

Finally, the extreme structural simplicity of the hinge, which allows simultaneously to achieve the coupling between the rod and the front part and to secure the lenses, leads to very modest manufacturing costs which make the manufacture of the spectacles extremely economical.

The presence of the means for locking the rotation of the rod beyond the opening and folding positions furthermore ensure correct use on the part of the user.

The invention is naturally susceptible to numerous modifications and variations, all of which are within the scope of the same inventive concept.

Thus, for example, figures 7 and 8 illustrate a second embodiment, in which a first terminal 106 is connected to the rod 104 and a second terminal 107 is connected to the front part.

In this case, too, the first surface 108 of the first terminal 106 and the second surface 109 of the second terminal 107 are arranged at a plane of arrangement which forms an acute angle with respect to the angle of arrangement of the front part.

Means for pivoting to the second terminal 107 are furthermore provided at the first surface 108 of the first terminal 106 and also constitute means for the temporary coupling therebetween, said means being constituted by a ball 121 which protrudes centrally to the first surface 108.

Said ball has a first through hole 122 which is defined at a diametrical axis thereof which is perpendicular to the plane of arrangement of the first surface 108, said first hole 122 also affecting the first terminal 106 up to a recess 123 defined at the lateral surface of said first terminal 106.

The ball 121 is temporarily associable, for example in a snap-together manner, at a complementarily shaped first seat 111, defined perpendicular to the plane of arrangement of the second surface 109 of the second terminal 107.

A screw 124 is associable at the first hole 122 from the end which is connected to the recess 123 and has a diameter which is slightly larger than that of said first hole 122.

The screw 124 thus allows to deform the ball 121 to the required extent, thus constituting a friction element between the rod and the front part.

Means are furthermore provided for locking the rotation of the rod with respect to the front part beyond the opening and folding positions, said means being constituted by a pivot 125 which can be inserted in an adapted second seat 113 defined on the second terminal 107 so that it is connected to the first seat 111 for accommodation of the ball 121.

A milling 126 is furthermore defined on said ball at the facing end of said second seat 113, defines approximately a semicircumferential arc and is adapted for accommodating the end of the pivot 125.

The intended aim and objects have thus been achieved in this case as well, obtaining a hinge which is structurally very simple and therefore has modest costs and allows to fold the rod and arrange it adjacent to the front part.

Figures 9, 10 and 11 illustrate a third embodiment of a hinge 205 which is again constituted by a first terminal 206, associated with the end of a rod 204, and by a second terminal 207, associated with the end of a front part 202.

In this embodiment, the first surface 208 and the second surface 209 respectively of the first terminal 206 and of the second terminal 207 face one another and are arranged at a plane which is inclined with respect to the plane of arrangement of the front part 202.

A preferably cylindrical recess 223 is defined at the first terminal 206 perpendicular to the plane of arrangement of the first surface 208 and is axially provided with a first hole 222 which also partially extends at the facing second surface 209 of the second terminal 207.

The axis of the recess 223 and therefore of the first hole 222 is arranged approximately centrally to said first and second surfaces.

A screw 224 can be arranged at the recess 223 and its stem is associable at the first hole 222; an elastically deformable element, constituted by a cylindrical helical compression spring 227, is accommodated at said recess coaxially to said stem.

In order to constitute the means for locking the rotation of the rod with respect to the front part, a projection 215 protrudes perpendicular to said first surface 208 and is accommodated at a complementarily shaped fourth seat 216 defined on the second surface 209.

Said fourth seat has a semicircular configuration.

Figures 12 to 16 illustrate a fourth embodiment, in which a first terminal 306 is associated with the end of the rod 304 and a second terminal 307 is associated with the front part 302.

Said first and second terminals respectively have a first surface 308 and a second surface 309 which are mutually associable and have a plane of arrangement which is inclined with respect to that of the front part 302.

A means for the pivoting and temporary coupling between the rod and the front part protrudes perpendicular and centrally to the first surface 308 and is constituted by a ball 321 on which a first through hole 322 is defined along a diametrical axis which is perpendicular to the plane of arrangement of the first surface 308; said first through hole affects the first terminal 306 up to an adapted recess 323 defined on the lateral surface thereof.

A screw 324 can be arranged at the first hole 322 starting from the recess 323, and the diameter of its stem is slightly larger than that of said first hole.

The ball 321 can thus be accommodated at a complementarily shaped first seat 311 defined centrally with respect to the second surface 309 of the second terminal 307.

Advantageously, the ball 321 is divided along a diametrical plane into two hemispheres 321a and 321b in order to allow, once the screw is associated with the first hole 322, the deformation of said hemispheres inside the first seat 311. Optimum friction between the rods and the front part is thus obtained.

A projection 315 which protrudes from the ball 321 at a region which is adjacent to the end of the first hole 322 cooperates to the constitution of the means for locking the rotation between the rod and the front part and has an axis which is parallel to that of said first hole.

The projection 315 is furthermore accommodated at a fourth seat 316 defined on the bottom of the first seat 311.

Said fourth seat 316 thus has a semicircular configuration of approximately one hundred and eighty degrees and can be also defined symmetrically with respect to the diametrical plane in order to indifferently allow the accommodation of a projection for a right rod or for a left rod.

The materials and dimensions which constitute the individual components of the hinge may also naturally be the most appropriate according to the specific requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Hinge, particularly for the coupling between the rod and the front part of spectacle frames, characterized in that it comprises pivoting means for allowing the rotation of said rod along a plane which is inclined with respect to the plane of arrangement of said front part, means being provided for the temporary coupling between said rod and said front part and for the locking of the rotation of said rod.

2. Hinge according to claim 1, characterized in that it is constituted by a first terminal, associated with the end of said rod which is opposite to the end which interacts with the ear of the user, and by a second terminal, which is associated with the free end of said front part, said first terminal and said second terminal being rotatably associated with one another along a plane which is inclined with respect to the plane of arrangement of said front part.

3. Hinge according to claims 1 and 2, characterized in that said first terminal and said second terminal respectively have a first surface and a second surface which face one another and which, once they are coupled, form an acute angle with respect to the plane of arrangement of said front part, and preferably wherein the pivoting between said first terminal and said second terminal occurs by means of a hollow pivot which protrudes from said first terminal perpendicular and centrally to said first surface, the terminal end of said hollow pivot being accommodatable at a first seat defined centrally and perpendicular to said second surface of said second terminal.

4. Hinge according to claims 1 and 3, characterized in that said first seat is a through seat at said second terminal and is connected to an adapted groove defined on said front part along an axis which is approximately parallel to the longitudinal axis of said rod, said groove communicating with a second seat which is defined at said front part until it affects an adjacent third seat for lenses, said hinge preferably further comprising a means, for locking the rotation of said rod with respect to said front part, which protrudes radially with respect to said hollow pivot from said first surface of said first terminal, said means being constituted by a projection which can be accommodated at a fourth seat defined on said second surface of said second terminal, said fourth seat having a semi-elliptical configuration for allowing a rotation of said projection through an arc of approximately one hundred and eighty degrees.

5. Hinge according to one or more of the preceding claims, characterized in that it comprises means for the temporary coupling between said front part and said rod, said means being constituted by a wire, which has an expansion at one of its ends, said hinge preferably having a fifth seat defined at said first terminal, said fifth seat being shaped complementarily to said expansion and connected to said hollow pivot, preferably wherein said wire, after passing at said hollow pivot, affects said groove and said second seat which are defined on said front part and is then extracted at said third seat, thus perimetrically embracing the lenses at adapted sixth seats defined thereon, said wire being associated, at its free end, with the bridge or with the other rod, and preferably wherein said rod is rotatable along a plane which is inclined with respect to the plane of arrangement of said front part whereby said rod can be arranged approximately parallel to said front part.

6. Hinge according to one or more of the preceding claims, characterized in that said means for pivoting to said second terminal are provided at said first surface of said first terminal and also constitute means for temporary coupling therebetween, said means being constituted by a ball which protrudes centrally to said first surface, said ball preferably having a first through hole which is defined at a diametrical axis thereof which is perpendicular to the plane of arrangement of said first surface, said first hole also affecting said first terminal up to a recess defined on the lateral surface of said first terminal, and preferably wherein said ball is temporarily associable, in a snap-together manner, at a complementarily shaped first seat defined perpendicular to the plane of arrangement of the second surface of said second terminal.

7. Hinge according to claims 1 and 6, characterized in that a screw is associable at said first hole from the end which is connected to said recess, the diameter of the stem of said screw being slightly larger than that of said first hole, said screw allowing to deform said ball to the required extent, thus constituting a friction element between said rod and said front part, said hinge preferably having means for locking the rotation of said rod with respect to said front part beyond the opening and folding positions, said means being constituted by a pivot insertable in a second seat defined on said second terminal so that said seat is connected to said first accommodation seat for said ball, said hinge preferably further comprising a milling defined on said ball at the facing end of said second seat which contributes to the constitution of said means, said milling approximately defining a semicircumferential arc and accommodating the end of said pivot.

8. Hinge according to one or more of the preceding claims, characterized in that it has a first surface and a second surface respectively for said first terminal and for said second terminal, said surfaces facing one another and being arranged at a plane which is inclined with respect to the plane of arrangement of said front part, a cylindrical recess being defined at said first terminal perpendicular to the plane of arrangement of said first surface, said recess being provided axially with a first hole which also extends partially at the facing second surface of said second terminal.

9. Hinge according to claims 1 and 8, characterized in that the axis of said recess and of said first hole is arranged centrally to said first surface and to said second surface, wherein a screw is preferably arranged at said recess, the stem of said screw being associable at said first hole, an elastically deformable element, constituted by a cylindrical helical compression spring, being accommodated coaxially to said stem at said recess, and preferably wherein said means for locking the rotation of said rod with respect to said front part are constituted by a projection which protrudes perpendicular to said first surface, said projection being accommodatable at a complementarily shaped fourth seat which has a semicircular shape and is defined on said second surface.

10. Hinge according to one or more of the preceding claims, characterized in that said first and second terminals respectively have a first surface and a second surface which can be mutually coupled and have a plane of arrangement inclined with respect to the plane of arrangement of said front part, a means for the pivoting and temporary coupling between said rod and said front part protruding perpendicular and centrally to said first surface, said means being constituted by a ball on which a first through hole is defined along a diametrical axis which is perpendicular to the plane of arrangement of said first surface, said first hole affecting said first terminal up to a recess defined on the lateral surface thereof.

11. Hinge according to claims 1 and 10, characterized in that a screw is arrangeable at said first hole starting from said recess, the diameter of the stem of said screw being slightly smaller than that of said first hole, wherein said ball is preferably accommodated at a complementarily shaped first seat which is defined centrally to said second surface of said second terminal, wherein said ball is preferably divided, along a diametrical plane, into two hemispheres so as to allow, once said screw is associated with said first hole, the deformation of said hemispheres within said first seat, thus constituting a friction element between said rods and said front part, and preferably wherein said means for locking the rotation between said rod and said front part are constituted by a projection which protrudes from said ball at a region adjacent to the end of said first hole, said projection having an axis parallel to that of said first hole and being accommodated at an adapted fourth seat defined on the bottom of said first seat.

Fig.1

Fig.2

Fig.3

Fig.4

Fig.5

Fig.6

Fig.7

Fig.8

Fig.9

Fig.10

Fig.11

Fig.12

Fig.13

Fig.14

Fig.15

Fig.16